# EUROPÄISCHE PATENTSCHRIFT

(11) **EP 0 560 181 B1**
(45) Veröffentlichungstag und Bekanntmachung des Hinweises auf die Patenterteilung: **20.09.1995**
(21) Anmeldenummer: 93103326.0
(22) Anmeldetag: 02.03.1993
(51) Int. Cl.: B60R 22/46

(54) **Antriebssvorrichtung zur Bewegung von KFZ-Bauteilen aus einer Normalposition in eine Sicherheitsposition**
Propulsion device for moving car components from a normal position to a safety position
Appareil de propulsion pour mettre en mouvement des pièces de véhicules d'une position normale à une position de sécurité

(30) Priorität: 13.03.1992 DE 4208157
(43) Veröffentlichungstag der Anmeldung: 15.09.1993
(73) Patentinhaber: HS Technik und Design Technische Entwicklungen GmbH, 82234 Wessling (DE)
(72) Erfinder: Specht, Martin, Dipl.-Ing.(FH), D-82340 Feldafing (DE); Meyer, Rudolf, Dipl.-Ing.(FH), D-85235 Odelzhausen (DE); Kraus, Walter, Dipl.-Ing.(FH), D-80689 München 21 (DE)
(74) Vertreter: Nöth, Heinz, Dipl.-Phys.

(56) Entgegenhaltungen:
- EP-A- 0 093 237
- DE-A- 2 249 786
- DE-A- 3 413 488
- DE-U- 9 108 781
- DE-U- 9 114 369
- US-A- 4 573 322

## Beschreibung

Die Erfindung betrifft eine Vorrichtung nach dem Oberbegriff des Patentanspruchs 1.

Bei einer derartigen aus der DE-OS 22 49 786 bekannten Vorrichtung erfolgt die Zündung des im Kolben angeordneten Gasgenerators duch ein Schaltorgan, das bei Auftreten einer plötzlichen Verzögerung des Fahrzeugs in Wirkung tritt.

Aufgabe der Erfindung ist es demgegenüber, eine Vorrichtung der eingangs genannten Art zu schaffen, bei welcher der Zünder mechanisch betätigt wird.

Diese Aufgabe wird erfindungsgemäß durch die kennzeichnenden Merkmale des Anspruchs 1 gelöst.

Aus der DE 91 08 781 U1 ist es bekannt, den Energiespeicher in Form einer Druckfeder und einen von der Druckfeder angetriebenen Kolben als Teil der Sensormasse beweglich auszuführen, wobei durch die Bewegung des Rohres der durch eine Sperre gehaltene Kolben entriegelt und von der Druckfeder angetrieben wird. Ferner ist es aus der EP 00 93 237 A1 bekannt, einen elektrisch über ein Zündkabel zu zündenden Treibsatz in einem Antriebskolben, der mit dem Zugseil verbunden ist, anzuordnen. Aus der DE 91 14 369 U1 ist es bekannt, eine durch eine Feder beaufschlagte Schlagmasse durch einen Sperrkörper in Ruheposition zu halten und nach Lösen der Sperre durch eine Pendelbewegung die Schlagmasse auf den Zünder eines Gasgenerators zu bewegen.

Demgegenüber erhält man bei der Erfindung eine autarke Antriebseinrichtung mit integrierter trägheitssensitiver Sensoreinrichtung zur Auslösung des die Antriebskraft liefernden Treibmittels in kompakter Anordnung in einem Zylinder. Die Antriebskraft kann auf beliebige im Kraftfahrzeug zurückzuziehende Bauteile, beispielsweise Lenkrad, Lenksäule, Pedale zur Einwirkung gebracht werden und insbesondere zum Straffen von Sicherheitsgurten verwendet werden. Ohne Umrüsten kann die Antriebseinrichtung zum Zurückziehen des Gurtschlosses und/oder als Automatenstrammer des Gurtaufrollautomaten eingesetzt werden.

Bei der Erfindung sind der Zünder, der Gasgenerator und der Kolben durch eine Feder gegeneinander vorgespannt und durch eine Sperre in Ruheposition gehalten, wobei nach dem Lösen der Sperre durch eine infolge Crash-Belastung verursachte Bewegung der trägheitssensitiven Sensormasse der Zünder gegen einen bevorzugt am Kolben vorgesehenen Schlagbolzen zum Zünden des Treibmittels bewegt wird.

In den Unteransprüchen sind Weiterbildungen der Erfindung gekennzeichnet.

In den Figuren sind Ausführungsbeispiele der Erfindung dargestellt. Anhand der Figuren wird die Erfindung noch näher erläutert. Es zeigt:
- Fig. 1:: ein erstes Ausführungsbeispiel im Längsschnitt;
- Fig. 2:: einen Gasgenerator, welcher im Ausführungsbeispiel der Fig. 1 verwendet werden kann;
- Fig. 3:: eine gegenüber dem Ausführungsbeispiel der Fig. 1 modifizierte Ausführungsform der Sperre;
- Fig. 4:: eine weitere modifizierte Ausführungsform für eine Sperre;
- Fig. 5:: ein zweites Ausführungsbeispiel im Längsschnitt;
- Fig. 6:: in schematischer Darstellung ein drittes Ausführungsbeispiel im Längsschnitt;
- Fig. 7:: ein viertes Ausführungsbeispiel im Längsschnitt;
- Fig. 8:: eine Detaildarstellung der Sperre, welche bei den Ausführungsbeispielen der Figuren 5 bis 7 zur Anwendung kommt, in einer Stellung unmittelbar nach dem Ansprechen der Sensoreinrichtung; und
- Fig. 9:: die Position der Sperre im gelösten Zustand.

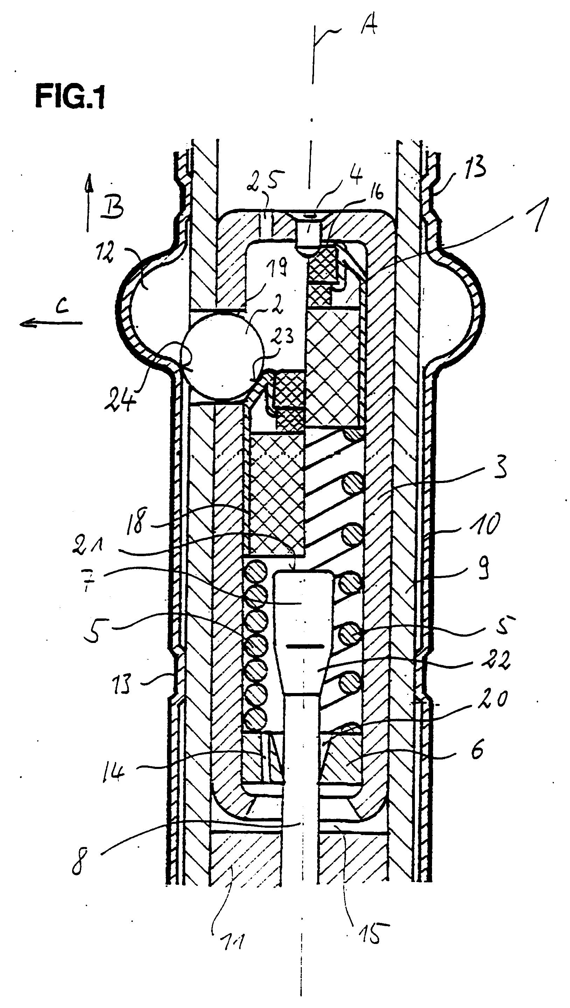

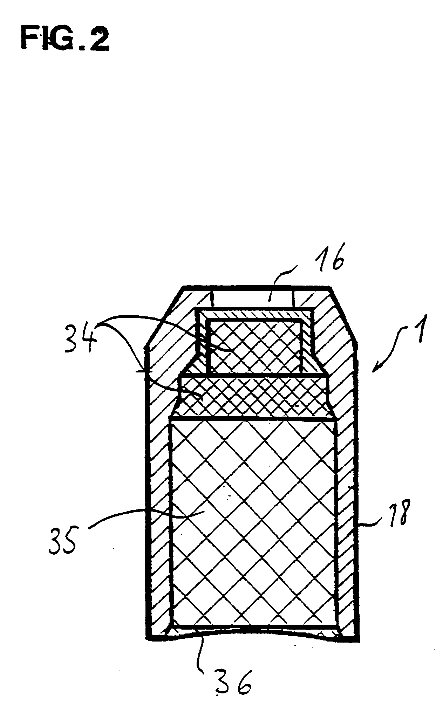

Bei dem in der Fig. 1 dargestellten Ausführungsbeispiel sind ein Kolben 3, ein Zylinder 9 und ein Führungsrohr 10 koaxial zueineinander liegend angeordnet. Der Kolben 3 wird im Zylinder 9 geführt. Der Zylinder 9 wird vom äußeren Führungsrohr 10, welches eine fahrzeugfeste Lagerung bildet, geführt. Im Kolben 3 befindet sich ein Gasgenerator 1, der im einzelnen in der Fig. 2 dargestellt ist. In der bezüglich der Längsachse A linken Position befindet sich der Gasgenerator 1 in Ruhestellung, und in der bezüglich der Längsachse A rechten Stellung befindet sich der Gasgenerator 1 in der gezündeten Stellung. Der Gasgenerator 1 wird durch eine Sperre, welche in der Fig. 1 durch eine in einer Kugelführung 19 geführten Sperrkugel 2 gebildet wird, gehalten. Die Kugelführung 19 ist eine quer zur Längsachse A sich erstreckende zylindrische Bohrung in der zylindrischen Wand des Kolbens 3. Diese Bohrung setzt sich fort in der zylindrischen Wand des Zylinders 9.

Der Gasgenerator 1 ist durch eine Feder 5 in der Ruhestellung in Richtung auf einen Schlagbolzen 4, der an einer Stirnseite des Kolbens 3 befestigt ist, vorgespannt. Der Gasgenerator 1 besitzt an seinem dem Schlagbolzen 4 zugewandten Ende einen Zünder 16. An der entgegengesetzten Stirnseite wirkt auf den Gasgenerator die Feder 5, die im dargestellten Ausführungsbeispiel als Zylinderdruckfeder ausgebildet ist. Die Feder 5 stützt sich an ihrem einen Ende am Kolben 3, und zwar an einer Düsenplatte 6, welche einen stirnseitigen Abschluß des Kolbens 3 bildet, ab. Die Düsenplatte 6 liegt entgegengesetzt zu der Stirnseite des Kolbens, in welcher der Schlagbolzen 4 angeordnet ist.

Die Düsenplatte 6 enthält eine oder mehrere Düsenöffnungen 14, die in einen Druckraum 15 münden. Der Druckraum 15 wird im Zylinder 9 gebildet, wobei der Druckraum 15 stirnseitig durch ein Dichtungselement 11 oder an deren Rohrabschluß gasdicht nach außen hin abgedichtet ist. Durch das Dichtungselement ist ein mit dem Kolben 3 verbindbares Zugseil 3 geführt. Ein nicht näher dargestelltes Ende des Zugseiles 3 ist in bekannter Weise mit einem Aufrollautomaten eines Sicherheitsgurtes oder mit einem Teil des Gurtbandes des Sicherheitsgurtes verbunden und dient zur Übertragung der vom Kolben 3 vermittelten Strafferbewegung auf den Sicherheitsgurt.

Bei der in der Fig. 1 dargestellten Ruhestellung befindet sich ein Verankerungsende 7 des Zugseiles 8 in einem bestimmten Abstand von einer Verankerungsstelle 20 in der Düsenplatte 6. Das Verankerungsende 7 besitzt gegenüber dem Durchmesser des Zugseiles 8 einen größeren Durchmesser und kann durch einen Verankerungsnippel, welcher mit dem Zugseil verpreßt ist, gebildet sein. Das Verankerungsende weist ferner einen konusförmigen Verankerungsteil 22 auf, der an die ebenfalls konusförmig ausgebildete Verankerungsstelle 20 in der Düsenplatte 6 angepaßt ist. Das Verankerungsende 7 wird erst nach dem Ansprechen der in die Gesamtanordnung der Vorrichtung integrierten Sensorik mit der Verankerungsstelle 20 in der Düsenplatte 6 gasdicht verankert, wie im einzelnen noch erläutert wird.

Durch die gezeigte Anordnung erreicht man ferner eine Sensorwirkung, welche im Crashfall, d.h. bei überhöhter Fahrzeugbeschleunigung bzw. -abbremsung anspricht. Der zylindrische Mantel des Kolbens 3 ist an der Innenwand des Zylinders 9 geführt. Über den Sperrkörper, d.h. über die Kugel 2 bzw. einen Sperrkegel 28, wird eine Verbindung zwischen dem Zylinder 9 und dem Kolben 3 hergestellt. D.h. also, der Sperrkörper hält in der dargestellten Ruhestellung nicht nur den vorgespannten Gasgenerator in der blockierten Ruhestellung, sondern stellt auch eine Verbindung zwischen dem Zylinder 9 und dem Kolben 3 dar für eine gemeinsame Bewegung der Crashbelastung innerhalb des äußeren Führungsrohres 10. Diese Bewegung des Kolbens 3 und des Zylinders 9 erfolgt gegen eine Kraftschwelle, die vermittelt sein kann durch Reibschluß zwischen dem Führungsrohr 10 und dem Zylinder 9, insbesondere an den Führungsflächen 13, welche im dargestellten Ausführungsbeispiel durch Eindrückungen in die Wandung des Führungsrohres 10 hergestellt sind. Diese Kraftschwelle, welche die Ansprechschwelle der in die Anordnung integrierten Sensorik bildet, kann auch durch ein nicht näher dargestelltes elastisches Rückstellelement, z.B. in Form einer Feder, welche entgegen der axialen Bewegungsrichtung (Pfeil B) auf den Zylinder 9 wirkt, erzeugt werden.

Bei Crashbelastung werden beim dargestellten Ausführungsbeispiel der Zylinder 9 und der Kolben 3 gemeinsam in Richtung des Pfeiles B (axiale Richtung) bewegt, so daß die Sperrkugel 2 in den Bereich eines Freiraumes im äußeren Führungsrohr 10 kommt, der durch eine umlaufende Ausbauchung 12 beim dargestellten Ausführungsbeispiel gebildet wird. Die Kraft der Feder 5 wirkt über eine am Gasgenerator 1 vorgesehene schräge Anlagefläche 23 auf die Sperrkugel 2, so daß die Sperrkugel 2 in den durch die Ausbauchung 12 gebildeten Freiraum gebracht wird.

Bei dem in der Fig. 1 dargestellten Ausführungsbeispiel wird die Sperrkugel 2 zwischen der schrägen Anlagefläche 23 am Gasgenerator 1 und einer Anlagekante 24 am Rand der Ausbauchung 12 im Führungsrohr 10 in der Kugelführung 19 gehalten. Hierdurch wird eine Blockierung der Zündung des Treibgases im Gasgenerator 1 und die auf der linken Seite in der Fig. 1 dargestellte Ruhestellung erreicht.

Wenn durch die Verlagerung der Sperrkugel 2 in den Freiraum der Ausbauchung 12 die Blockierung bzw. Sperre gelöst wird, schlägt der Zünder 16 in der Stirnseite des Gasgenerators 1 durch die Wirkung der Feder 5 auf den Schlagbolzen 4. Der Gasgenerator 1 nimmt dann die in der rechten Darstellung der Fig. 1 gezeigte Position ein. Die axiale Bewegung des Treibgasgenerators 1 im Innenraum des Kolbens 3 wird noch dadurch ermöglicht, daß eine Entlüftungsöffnung 25 an der Stirnseite des Kolbens 3 mit dem Schlagbolzen 4 vorgesehen ist.

Durch Zündung des Treibsatzes im Gasgenerator 1 wird im Innenraum des Kolbens 3 ein hoher Druck ausgebildet. Der Treibgasdruck entweicht durch die Düsen 14 in der Düsenplatte 6 und treibt den Kolben 3 in axialer Richtung (Pfeil B) im Zylinder 9 zur Erzeugung der Gurtstrafferbewegung.

Durch den vom Treibgas erzeugten hohen Druck wird der Zylindermantel 18 des Treibgasgenerators, der im Kolben 3 in axialer Richtung beweglich angeodnet ist, gegen die Innenwand des Kolbens gedrückt. Hierdurch wird eine zusätzliche Abdichtung des Innenraumes des Kolbens 3 nach außen, insbesondere der Kugelführung 19, erreicht. Der vom Treibgas erzeugte Druck ist so hoch, daß die relativ dünne Wand des Mantels 18 des Gasgenerators 1 aufgeweitet wird und gegen die Innenwand des Kolbens 3 angedrückt wird, so daß eine gasdichte Anlage der Außenseite des zylindrischen Mantels 18 an die Innenwand des Kolbens 3 erreicht wird. Der im Innenraum des Kolbens 3 aufgebaute Druck entweicht daher nur durch die Düsenöffnung 14 bzw. Düsenöffnungen 14 in der Düsenplatte 6.

Bei der axialen Bewegung des Kolbens 3 wird die konusförmige Verankerungsstelle 20 zum verdickten Verankerungsende 7 des Zugseiles 8 bewegt. Das konusförmige Verankerungsteil 22 wird dabei gasdicht in die konusförmige Verankerungsstelle 20 der Düsenplatte 6 gedrückt. Die Düsenplatte 6 hat somit mehrere Funktionen. Sie dient zur Herstellung einer gasdichten Verankerung zwischen dem Zugseil 8 und dem Kolben 3. Ferner enthält sie die Düsenöffnungen 14, durch welche der Treibgasdruck entweicht und auf diese Weise die Schubkraft für die Strammerbewegung des Kolbens 3 erzeugt. Zur Unterstützung der gasdichten Verbindung zwischen dem verdickten Verankerungsende 7 und der Düsenplatte 6 besitzt das Verankerungsende 7 eine ebene Fläche 21, auf die der hohe Treibgasdruck im Innenraum des Kolbens 3 zusätzlich wirkt, um den konusförmigen Verankerungsteil 22 in die konusförmige Verankerungsstelle 20 zu drücken.

Zur Erzeugung der Strafferbewegung, welche auf das Zugseil 8 übertragen wird, bewegt sich der Kolben 3 aufgrund der Schubkraft des durch die Düsenöffnungen 14 austretenden Treibgases im Zylinder 9. Der Zylinder 9 dient hierbei als Führungsrohr für den Kolben 3. Die Sperrkugel 2 ist soweit in den Freiraum der Ausbauchung 12 bewegt (Pfeil C), daß der Kolben 3 sich ungehindert im Zylinder 9 in axialer Richtung bewegen kann. Wie schon erläutert, ist der Innenraum des Kolbens 3 nach außen hin abgedichtet dadurch, daß der zylindrische Mantel 18 des Gasgenerators gegen die Innenwand des Kolbens 3 gepreßt ist, wodurch die Öffnung der Kugelführung 19 im Kolben 3 gasdicht verschlossen ist, so daß der im Innenraum des Kolbens aufgebaute Treibgasdruck vollständig zur Erzeugung der Schubkraft, welche auf den Kolben 3 wirkt, ausgenutzt wird.

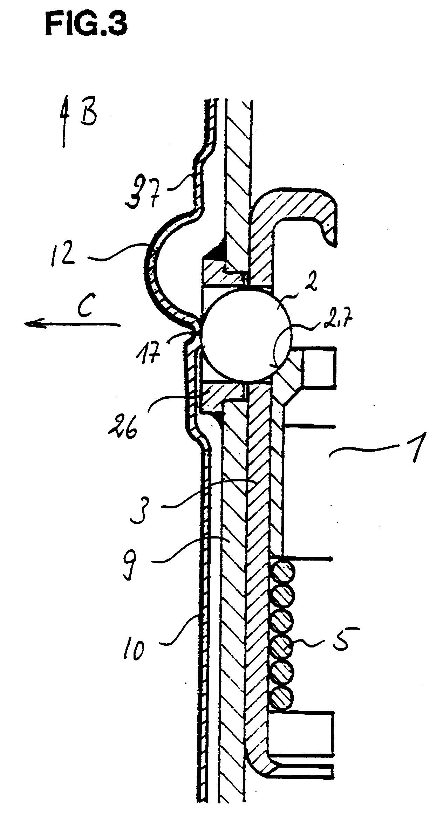

Bei dem in der Fig. 3 dargestellten Ausführungsbeispiel ist in den Zylinder 9 eine Führungshülse 26 für die Sperrkugel 2 eingeschweißt. Bei dieser Ausführungsform liegt die Sperrkugel 2 an einer Anlagefläche 27, welche der Kugeloberfläche der Sperrkugel 2 angepaßt ist, am Gasgenerator 1 an. Am äußeren Führungsrohr 10 liegt die Sperrkugel 2 im Bereich einer in das Rohrinnere ragenden Eindrückung 17 an. Das Führungsrohr 10 besitzt ferner eine Ausweitung 37, so daß eine Bewegungsmöglichkeit des Zylinders mit der Führungshülse 26 im Führungsrohr 10 bei Crashbelastung möglich ist.

Die Führungshülse 26 ist aus einem harten Material, beispielsweise Hartsintermaterial, gefertigt, um mit entsprechender Flächenpressung zwischen Hülsenführung und Kugeloberfläche eine ausreichende Dichtung nach außen zu erreichen.

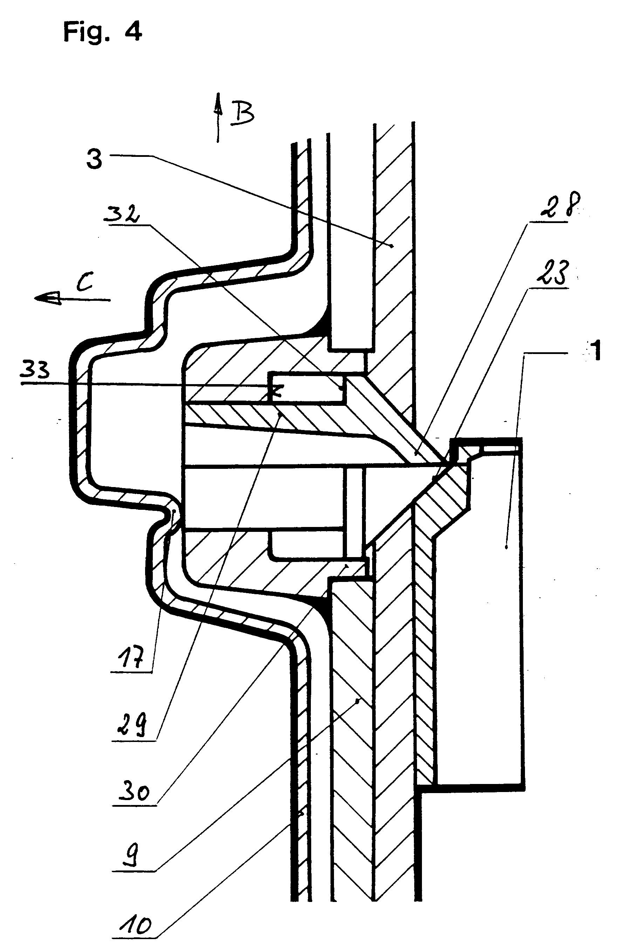

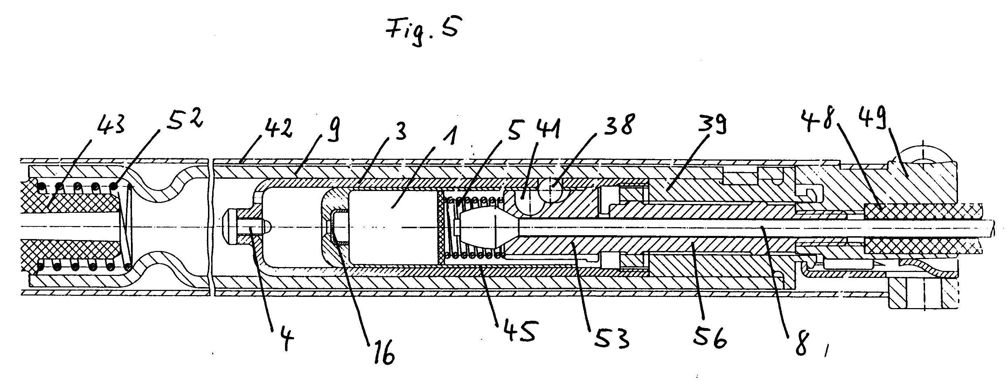

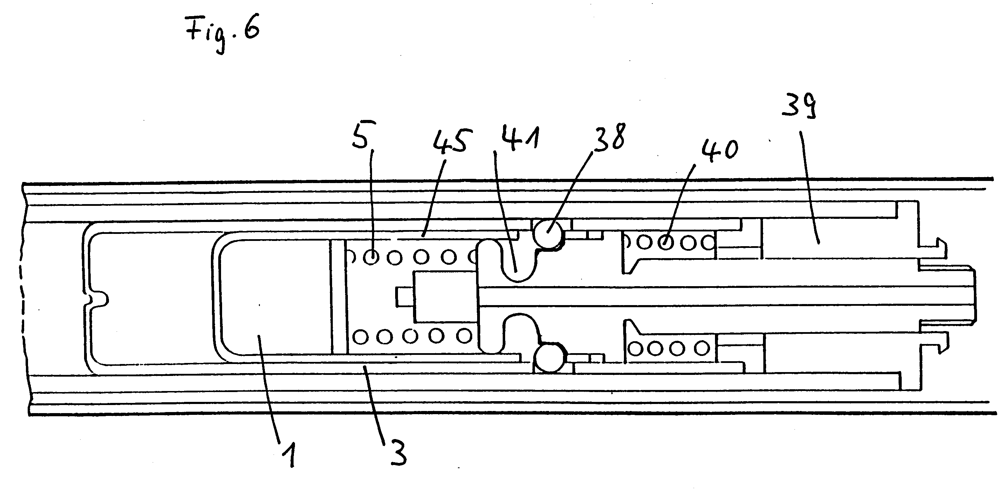

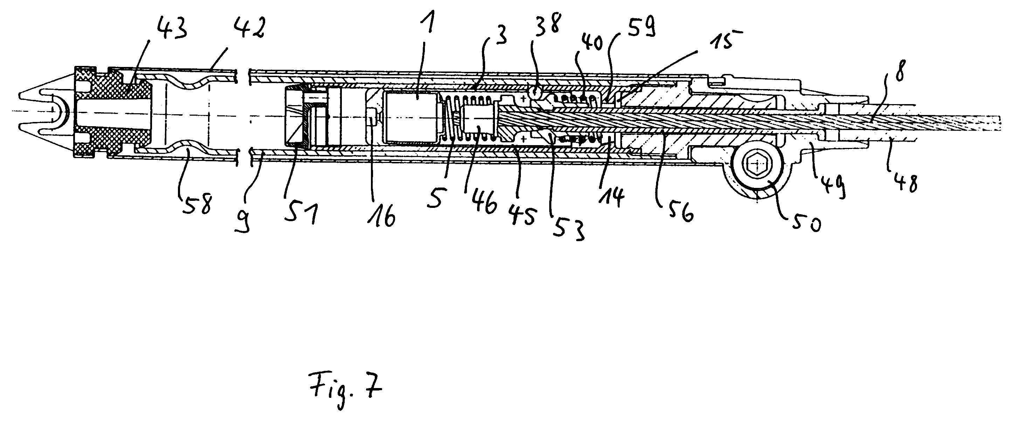

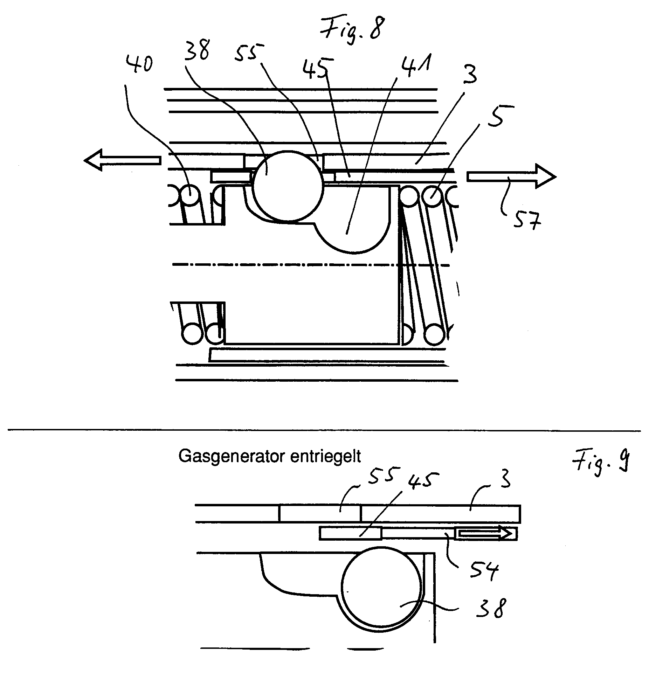

Eine weitere gasdichte Ausführungsform für eine Sperre ist in der Fig. 4 dargestellt. Bei dieser Ausführungsform ist der Sperrkörper als Sperrkeil oder Sperrkegel 28 ausgebildet. Der Sperrkegel 28 liegt an der schrägen Anlagefläche 23 des Gasgenerators 1 an.

Der Sperrkegel besitzt einen Schaft 29, der zylindrisch ausgebildet sein kann. Der zylindrisch ausgebildete Schaft ist in einer Führungshülse 30 in seiner axialen Richtung verschiebbar gelagert. Die Führungshülse 30 ist, beispielsweise durch Verschweißen, mit dem Zylinder 9 verbunden und befindet sich in der Wandung des Zylinders 9. Wenn sich der Zylinder 9 im Crashfall zusammen mit dem Kolben 3 bei Crashbelastung in axialer Richtung (Pfeil B) bewegt, kommt der Schaft 29 des Sperrkegels außer Eingriff mit dem Vorsprung 17, so daß aufgrund der Kraft der Feder 5, welche auf den Gasgenerator 1 wirkt, der Sperrkegel in der Fig. 4 nach links (Pfeilrichtung C) in der Hülse 30 verschoben wird. Der Sperrkegel 28 wird in der Hülse 30 soweit verschoben, daß er mit seiner Unterseite 32 gegen eine Anschlagfläche 33 an der Führungshülse 30 angedrückt wird. Durch die aneinander liegenden Flächen 32 und 33 sowie durch die aneinander liegenden Flächen der Innenwand der Hülse 30 und des Schaftes 29 wird eine Labyrinthdichtung erreicht, die eine gasdichte Ausbildung der dargestellten Sperreinrichtung bewirkt.

Der in der Fig. 1 dargestellte Gasgenerator 1 besitzt an seiner einen dem Schlagbolzen 4 zugewendeten Stirnseite den Zünder 16 sowie eine zwischen dem Zünder 16 in bekannter Weise ausgebildete Temperaturkette 34, welche bei Zündung des Zünders für eine Temperaturerhöhung sorgt, die auf das letztlich zu zündende Treibmittel 35 im Inneren des Gasgenerators einwirkt. Die andere Stirnseite des Gasgenerators ist mit einem Versiegelungslack verschlossen, der sich beim Zünden des Treibmittels 35 und dem im Innenraum des Kolbens vorhandenen Luftsauerstoff zu einem Treibgasgemisch verbindet, das den erforderlichen Überdruck aufbaut, welcher beim Entweichen durch die Düsen 14 für die erforderliche Schubkraft bei der Strafferbewegung sorgt.

Bei dem in der Fig. 1 dargestellten Ausführungsbeispiel ist der Schlagbolzen 4 als Schraube ausgebildet, die in eine entsprechende Öffnung in der Stirnseite des Kolbens 3 einschraubbar ist. Das kegelige in den Innenraum des Kolbens 3 ragende Ende des Schraubbolzens bildet den Zündanschlag für den Zünder 16 im Gasgenerator 1. Beim Zusammenbau von Zylinder 9 und Kolben 1 sowie der Sperre (Kugel 2 oder Sperrkegel 28) und Einsetzen dieser Einrichtung in das äußere Führungsrohr 10, welches als zweischaliges Führungsrohr ausgebildet sein kann, ist die als Schlagbolzen wirkende Schraube 4 entfernt, so daß es zu keiner Zündung kommen kann und das Ansprechverhalten der in dieser Anordnung integrierten Sensorik überprüft werden kann. Die Schraube 4 wird dann nach Beendigung der Montage eingesetzt. Solange die Schraube 4 in den Kolben 3 nicht eingesetzt ist, ist die Gesamtanordnung gegen Zündung gesichert. Die Anordnung wird erst dann entsichert, wenn der Schlagbolzen 4 eingeschraubt ist.

Bei den in den Figuren 5 bis 7 dargestellten Ausführungsbeispielen ist der Zylinder 9 zusammen mit einer Sensormasse 39 und dem Kolben 3 in axialer Richtung verschiebbar gelagert. Diese verschiebbare Anordnung ist an einer fahrzeugfesten Abstützung 49 und einer Lagerkappe 43 (Figuren 5 und 7) in axialer Richtung verschiebbar gelagert. Beim Ausführungsbeispiel der Fig. 5 erfolgt die Verschiebung dieser die gesamte Sensormasse bildenden Anordnung gegen eine Sensorfeder 52, welche fahrzeugseitig an der Lagerkappe 43 am Ende des Zylinders 9 außerhalb der Führung für den Kolben 3 angeordnet ist. Bei den Ausführungsbeispielen 6 und 7 befindet sich eine Sensorfeder 40 im Innern des Kolbens 3.

Die Sperre wird bei den Ausführungsbeispielen der Figuren 5 bis 7 von einer oder mehreren Kugeln 38 gebildet, die in Normalposition im Innern des Kolbens 3 an einem Sensorkopf 53 abgestützt ist bzw. sind. Die Ruheposition der Sperrkugeln 38 ist in den Figuren 5, 6 und 7 dargestellt. In der Normalposition bzw. Ruhelage befinden sich die Kugeln 38 im flachen Teil einer zweistufig ausgebildeten Ausnehmung. In dieser Position wird die jeweilige Sperrkugel 38 so gehalten, daß die Kugelmitte radial innerhalb der Innenwand des Kolbens 3 liegt. Der andere Kugelteil ragt in eine Ausnehmung 55 in der Wand des Kolbens 3. Auf den innerhalb des Kolbens 3 liegenden Teil der Kugel 38 wirkt die Kraft der Feder 5, mit welcher der Zünder 16 des Gasgenerators 1 in Richtung auf den Schlagbolzen 4 vorgespannt ist, ein. Hierzu befindet sich dieser Kugelteil in einer Ausnehmung 54, einer Hülse 45, welche den Gasgenerator 1 aufnimmt.

Wenn bei einer extremen Fahzeuggeschwindigkeitsänderung (Crashfall) die vom Kolben 3, dem Zylinder 9 und dem Sensormassekörper 39 gebildete Sensormasse sich in den Figuren 5 und 6 nach links und in der Figur 7 nach rechts bewegt, wird die jeweilige Sperrkugel 38 aus dem flachen Teil, in welcher sie in Ruhelage gehalten worden ist, in die radiale Vertiefung 41 des Sensorkopfes 3 bewegt. Der Sensorkopf 53 ist bei dieser Bewegung der Sensormasse fahrzeugfest über einen Sensorträger 56 an der fahrzeugfesten Abstützung 49 gehalten, so daß die Sensormasse gegenüber dem Sensorkopf 3 die Bewegung in axialer Richtung gegen die Kraft der Sensorfeder 40 (Figuren 6 und 7) bzw. 52 (Figur 5) ausführt. Bei der Bewegung des Kolbens 3, der einen Bestandteil der Sensormasse bildet, gegen die Kraft der Sensorfeder aufgrund der überhöhten Beschleunigung (in Fig. 8 in Richtung des Pfeiles 57), bewegt sich auch die Hülse 45, auf welche die Kraft der Feder 5 (Schlagfeder) wirkt in dieser Richtung. Da die Kraftrichtungen der Federn 5 und der Sensorfeder 40 bzw. 52 entgegengesetzt sind, greift die Hülse 45 mit ihrem einen Ausnehmungsrand (linker Rand der Ausnehmung 54 in der Fig. 8) an der einen Seite der Kugel 38 an, und der Kolben 3 liegt mit dem Rand seiner Ausnehmung 55 an der anderen Seite der Kugel 38 an. Der an der Kugel 38 anliegende Rand der Ausnehmung 55 im Kolben 3 liegt radial weiter außen als der Rand der Ausnehmung 54 in der Hülse 45. Hierdurch entsteht, begünstigt noch durch die einander entgegengesetzt gerichteten Kräfte der Federn 5 und 40 bzw. 52, welche über die Hülse 45 und den Kolben 3 auf die Kugel 38 einwirken, ein Moment um den an der Kugel 38 anliegenden Rand der Ausnehmung 55 im Kolben 3, durch welches eine Kraftkomponente vermittelt wird in Richtung auf die Achse des Zylinders 9 zu. Das bedeutet, daß bei der Relativverschiebung von Kolben 3 und Hülse 45 gegenüber dem fahrzeugfesten Sensorkopf 53 die Kugel in die radial verlaufende Vertiefung 41 aktiv eingebracht wird, so daß die Sperre gelöst wird. Unter der Wirkung der Feder 5 (Schlagfeder) kann sich dann die Hülse 45 mit dem Zünder 16 und dem Gasgenerator auf den Schlagbolzen 4 an der einen Stirnseite des Kolbens 3 zu bewegen (Fig. 9).

Die dadurch gezündeten Treibgase strömen durch die Düsenöffnungen 14 im Kolben 3 in den Gasraum 15, wodurch der Kolben 3 im Zylinder 9 zur Gurtstraffung bewegt wird. Das mit dem zurückzuziehenden Bauteil verbundene Zugseil 8 wird dabei mitbewegt. Bei dieser Antriebsbewegung des Kolbens 3 löst sich der Kolben 3 von dem Sensormassekörper 39. Ferner wird beim Ausführungsbeispiel der Fig. 7 der Sensorkopf 53 vom Sensorträger 56 durch den quer verlaufenden Kolbenbo den, in welchem auch die Düsenöffnungen 14 sich befinden, abgetrennt und bei der Antriebsbewegung mitbewegt.

Bei diesem Ausführungsbeispiel (Fig. 7) ist der Sensorkopf 53 in einem Befestigungsmittel (Befestigungsnippel 46) eingesteckt, in welchem das vordere Ende des Zugseiles 8 befestigt ist. Der Außendurchmesser des Sensorkopfes 53 und auch der des Befestigungsnippels 46 sind größer als die Bohrung im Kolbenboden 59, durch welche im Ruhezustand der Sensorträger 56 und das hindurchgeführte Zugseil 8 ragen. Der Außendurchmesser dieser Bauteile ist jedoch so bemessen, daß das vom Gasgenerator 1 erzeugte Treibgas seitlich vorbeifließen kann und durch die Düsen 14 in den Druckraum 15 austreten kann.

Der Sensorträger 56 ist im Innern als Zugseilführung ausgebildet, durch welches bei der Strafferbewegung das Zugseil gleiten kann. Bei der Strafferbewegung bleibt der Zylinder 9 mit dem Sensormassekörper 39 beispielsweise durch eine Schraubverbindung 47 verbunden und stützt sich dabei an der fahrzeugfesten Abstützung 49 ab. Das Zugseil 8 ist zum zurückzuziehenden Bauteil durch eine Bowdenzughülle 48, welche an der fahrzeugfesten Abstützung 49 befestigt ist, hindurchgeführt. Die fahrzeugfeste Abstützung 49 kann durch eine Sicherungsschraube 50 am Fahrzeug befestigt sein. Am anderen Ende des Zylinders 9 ist dieser, wie schon erläutert wurde, verschiebbar an der Lagerkappe 43 abgestützt. Die Lagerkappe 43 ist ebenfalls durch nicht näher dargestellte Befestigungsmittel mit dem Fahrzeugaufbau verbunden. Die Vorderseite des Kolbens 3 ist in der Fig. 7 mit einer Prallplatte 51 versehen, welche am Ende der Kolbenbewegung in einer Zylinderverengung 58 anliegt. Nach außen ist die Gesamtanordnung durch ein Schutzrohr 42 abgedeckt, das an der Lagerkappe 43 und der Abstützung 49 befestigt ist.

## Patentansprüche

1. Vorrrichtung zur Erzeugung einer Antriebskraft, durch welche ein oder mehrere Bauteile in einem Kraftfahrzeug aus einer Normalposition in eine zurückgezogene Sicherheitsposition bewegt wird bzw. werden, mit einer Sensoreinrichtung, welche auf eine überhöhte Fahrzeuggeschwindigkeitsänderung anspricht, einem in einem Kolben (3) angeordneten Gasgenerator (1), der bei ansprechender Sensoreinrichtung zum Antrieb des Kolbens (3) in einem Zylinder (9) durch Zündung ein Druckgas freisetzt, und einer Verbindung (8) zwischen dem Kolben (3) und dem bzw. den zu bewegenden Bauteilen,
dadurch **gekennzeichnet,**
daß im Kolben (3) ein Zünder (16) des Gasgenerators (1) und ein Schlagbolzen (4) durch eine Feder (5) gegeneinander vorgespannt sind und durch eine Sperre (2, 19; 28, 29; 38) in Ruheposition gehalten sind, und daß die Sperre (2, 19; 28, 29; 38) durch eine gegenüber einer fahrzeugfesten Lagerung (10; 43, 49) beweglichen trägheitssensitiven Sensormasse (3, 9; 39) lösbar ist.

2. Vorrichtung nach Anspruch 1, dadurch gekennzeichnet, daß der Zünder (16) gegenüber dem am Kolben (3) vorgesehenen Schlagbolzen (4) vorgespannt ist.

3. Vorrichtung nach Anspruch 1 oder 2, dadurch gekennzeichnet, daß der Gasgenerator (1) mit dem Zünder (16) gegenüber dem Kolben (3) durch eine Feder (5) vorgespannt ist.

4. Vorrichtung nach einem der Ansprüche 1 bis 3, dadurch gekennzeichnet, daß der Zylinder (9) als Teil einer Sensormasse (3, 9; 39) zum Lösen der Sperre (2, 19; 28, 30; 38) beweglich geführt ist, so daß der Gasgenerator (1) mit dem Zünder (16) gegen einen am Kolben (3) vorgesehenen Schlagbolzen (4) bewegbar ist.

5. Vorrichtung nach einem der Ansprüche 1 bis 4, dadurch gekennzeichnet, daß eine oder mehrere Düsenöffnung en (14) im Kolben (3) in einen Druckraum (15) im Zylinder (9) mündet bzw. münden.

6. Vorrichtung nach einem der Ansprüche 1 bis 5, dadurch gekennzeichnet, daß der Zylinder (9) in einer fahrzeugfesten Lagerung (10; 43, 49) beweglich geführt ist.

7. Vorrichtung nach einem der Ansprüche 1 bis 6, dadurch gekennzeichnet, daß der Kolben (3) als weiterer Bestandteil der Sensormasse mit dem Zylinder (9) mit beweglich ist.

8. Vorrichtung nach einem der Ansprüche 1 bis 7, dadurch gekennzeichnet, daß der Gasgenerator (1) einen zylindrischen Mantel (18) aufweist, der durch den Treibgasdruck nach außen gegen die Innenwand des Kolbens (3) andrückbar ist.

9. Vorrichtung nach einem der Ansprüche 1 bis 8, dadurch gekennzeichnet, daß die Sperre (2, 19; 28, 30; 38) durch wenigstens einen in einer Ausnehmung (19; 55) des Kolbens (3) beweglich gelagerten Sperrkörper (2; 28; 38) gebildet ist, der in Ruhestellung in den Innenraum des Kolbens ragt.

10. Vorrichtung nach einem der Ansprüche 1 bis 9, dadurch gekennzeichnet, daß bei der durch Crashbelastung verursachten Bewegung der Sensormasse (3, 9) der Sperrkörper (2; 28) aus dem Innenraum des Kolbens (3) durch die Wirkung der Feder (5) bewegbar ist.

11. Vorrichtung nach einem der Ansprüche 1 bis 9, dadurch gekennzeichnet, daß bei der durch Crashbelastung verursachten Bewegung der Sensormasse (3, 9; 39) der Sperrkörper in den Innenraum des Kolbens (3) durch die Wirkung der Feder (5) bewegbar ist.

12. Vorrichtung nach einem der Ansprüche 1 bis 11, dadurch gekennzeichnet, daß die Stelle, an welcher die Sperre (2, 19; 28, 30) in der Wand des Kolbens (3) angeordnet ist, durch einen Teil des zylindrischen Mantels (18) des Gasgenerators (1), der durch den Treibgasdruck gegen die Innenwand des Kolbens (3) gedrückt ist, gasdicht abgedeckt ist.

13. Vorrichtung nach einem der Ansprüche 1 bis 12, dadurch gekennzeichnet, daß die Sensormasse (3, 9; 39) im Crashfall in axialer Richtung des Zylinders (9) an der fahrzeugfesten Lagerung (10; 43, 49) beweglich ist.

14. Vorrichtung nach einem der Ansprüche 1 bis 12, dadurch gekennzeichnet, daß die Sensormasse im Crashfall quer zur axialen Richtung der fahrzeugfesten Lagerung beweglich ist.

15. Vorrichtung nach einem der Ansprüche 1 bis 14, dadurch gekennzeichnet, daß der Zylinder (9) zum Teil durch Reibschluß mit der fahrzeugfesten Lagerung in der Ruhelage gehalten ist.

16. Vorrichtung nach einem der Ansprüche 1 bis 15, dadurch gekennzeichnet, daß der Zylinder (9) durch Federkraft bzw. elastische Rückstellmittel in der Ruhelage gehalten ist.

17. Vorrichtung nach einem der Ansprüche 1 bis 16, dadurch gekennzeichnet, daß der Sperrkörper als Kugel (12; 38) ausgebildet ist.

18. Vorrichtung nach einem der Ansprüche 1 bis 16, dadurch gekennzeichnet, daß der Sperrkörper als Kegel (28) ausgebildet ist.

19. Vorrichtung nach Anspruch 11 und 17, dadurch gekennzeichnet, daß der jeweils als Kugel (38) ausgebildete Sperrkörper in Ruhestellung im Kolbeninnern derart abgestützt ist, daß die Kugelmitte radial innerhalb der Kolbeninnenwand liegt und daß die Kraft der Feder (5) an den innerhalb der Kolbeninnenwand liegenden Teil der Kugel (38) angreift.

20. Vorrichtung nach Anspruch 19, dadurch gekennzeichnet, daß die Kugel (38) in Ruhestellung ferner in einer Ausnehmung (54) einer den Gasgenerator (1) aufnehmenden Hülse (45) liegt, die im Kolbeninnern gegenüber dem Kolben (3) verschiebbar geführt ist und die Kraft der Feder (5) auf die Kugel (38) überträgt.

21. Vorrichtung nach Anspruch 19 oder 20, dadurch gekennzeichnet, daß die Kugel (38) an einem in Ruhestellung fahrzeugfesten Sensorkopf (53) abgestützt ist, der eine radiale Vertiefung (41) aufweist, in welche die Kugel (38) durch die Krafteinwirkung der Feder (5) zur Freigabe der Sperre radial nach innen verschiebbar ist und daß am Sensorkopf (53) eine Sensorfeder (40) abgestützt ist, gegen welche die Sensormasse (3, 9; 39) bewegbar ist.

## Claims

1. Apparatus for producing a drive force by which one or more components in a motor vehicle is or are moved from a normal position into a retracted safety position, comprising a sensor device which responds to an excessive change in vehicle speed, a gas generator (1) which is arranged in a piston (3) and which, when the sensor device responds, liberates by firing a pressure gas to drive the piston (3) in a cylinder (9), and a connection (8) between the piston (3) and the component or components to be moved, characterised in that in the piston (3) a detonator (16) of the gas generator (1) and a striker pin (4) are biased towards each other by a spring (5) and are held in a rest position by a lock (2, 19; 28, 29; 38), and that the lock (2, 19; 28, 29; 38) is releasable by an inertia-sensitive sensor mass (3, 9; 39) which is movable relative to a mounting means (10; 43, 49) which is fixed with respect to the vehicle.

2. Apparatus according to claim 1 characterised in that the detonator (16) is biased relative to the striker pin (4) which is provided on the piston (3).

3. Apparatus according to claim 1 or claim 2 characterised in that the gas generator (1) with the detonator (16) is biased relative to the piston (3) by a spring (5).

4. Apparatus according to one of claims 1 to 3 characterised in that the cylinder (9) is guided movably as part of a sensor mass (3, 9; 39) for release of the lock (2, 19; 28, 30; 38) so that the gas generator (1) with the detonator (16) is movable towards a striker pin (4) provided on the piston (3).

5. Apparatus according to one of claims 1 to 4 characterised in that one or more nozzle openings (14) in the piston (3) opens or open into a pressure chamber (15) in the cylinder (9).

6. Apparatus according to one of claims 1 to 5 characterised in that the cylinder (9) is guided movably in a mounting means (10; 43; 49) which is fixed with respect to the vehicle.

7. Apparatus according to one of claims 1 to 6 characterised in that the piston (3) as a further component of the sensor mass is also movable with the cylinder (9).

8. Apparatus according to one of claims 1 to 7 characterised in that the gas generator (1) has a cylindrical casing (18) which can be pressed outwardly against the inside wall of the piston (3) by the propellent gas pressure.

9. Apparatus according to one of claims 1 to 8 characterised in that the lock (2, 19; 28, 30; 38) is formed by at least one locking body (2; 28; 38) which is mounted movably in an opening (19; 55) of the piston (3) and which in the rest position projects into the interior of the piston.

10. Apparatus according to one of claims 1 to 9 characterised in that upon movement of the sensor mass (3, 9) which is caused by a crash loading the locking body (2; 28) is movable out of the interior of the piston (3) by the force of the spring (5).

11. Apparatus according to one of claims 1 to 9 characterised in that upon movement of the sensor mass (3, 9; 39) which is caused by a crash loading the locking body is movable into the interior of the piston (3) by the force of the spring (5).

12. Apparatus according to one of claims 1 to 11 characterised in that the location at which the lock (2, 19; 38, 30) is arranged in the wall of the piston (3) is gas-tightly covered by a part of the cylindrical casing (18) of the gas generator (1) which is pressed against the inside wall of the piston (3) by the propellent gas pressure.

13. Apparatus according to one of claims 1 to 12 characterised in that in a crash situation the sensor mass (3, 9; 39) is movable in the axial direction of the cylinder (9) on the mounting means (10; 43, 49) which is fixed with respect to the vehicle.

14. Apparatus according to one of claims 1 to 12 characterised in that in a crash situation the sensor mass is movable transversely with respect to the axial direction of the mounting means which is fixed with respect to the vehicle.

15. Apparatus according to one of claims 1 to 14 characterised in that the cylinder (9) is held in the rest position in part by frictional engagement with the mounting means which is fixed with respect to the vehicle.

16. Apparatus according to one of claims 1 to 15 characterised in that the cylinder (9) is held in the rest position by spring force or resilient return means.

17. Apparatus according to one of claims 1 to 16 characterised in that the locking body is in the form of a ball (12; 38).

18. Apparatus according to one of claims 1 to 16 characterised in that the locking body is in the form of a cone (28).

19. Apparatus according to claim 11 and claim 17 characterised in that the locking body which is respectively in the form of a ball (38) is supported in the interior of the piston in the rest condition in such a way that the centre of the ball is radially within the inside wall of the piston and that the force of the spring (5) engages the pert of the ball (38) which is within the inside wall of the piston.

20. Apparatus according to claim 19 characterised in that in the rest position the ball (38) is also disposed in an opening (54) in a sleeve (45) which accommodates the gas generator (1) and which is guided displaceably with respect to the piston (3) in the interior of the piston and which transmits the force of the spring (5) to the ball (38).

21. Apparatus according to claim 19 or claim 20 characterised in that the ball (38) is supported against a sensor head (53) which in the rest position is fixed with respect to the vehicle and which has a radial depression (41) into which the ball (38) is radially inwardly displaceable by the effect of the force of the spring (5) to release the lock and that a sensor spring (40) is supported against the sensor head (53), the sensor mass (3, 9; 39) being movable against the sensor spring.

## Revendications

1. Dispositif destiné à engendrer une force motrice, par laquelle un ou plusieurs éléments d'un véhicule automobile est ou sont déplacés d'une position normale vers une position de sécurité en retrait, comportant un dispositif de détection qui réagit à une variation excessive de la vitesse du véhicule, un générateur de gaz (1) disposé dans un piston (3) qui, lors de la réaction du dispositif de détection, dégage par amorçage un gaz sous pression destiné à entraîner le piston (3) dans un cylindre (9), et une liaison (8) entre le piston (3) et le ou les éléments à déplacer,
caractérisé par le fait que,
dans le piston (3), une amorce (16) du générateur de gaz (1) et un percuteur (4) sont précontraints l'un par rapport à l'autre au moyen d'un ressort (5) et maintenus en position de repos par un dispositif de blocage (2, 19; 28, 29; 38), et que le dispositif de blocage (2, 19; 28, 29; 38) peut être débloqué par une masse de détection (3, 9; 39) sensible à l'inertie et qui est mobile par rapport à un support (10; 43, 49) solidaire du véhicule.

2. Dispositif selon la revendication 1, caractérisé par le fait que l'amorce (16) est précontrainte par rapport au percuteur (4) prévu sur le piston (3).

3. Dispositif selon l'une des revendications 1 ou 2, caractérisé par le fait que le générateur de gaz (1) avec l'amorce (16) sont précontraints par rapport au piston (3) au moyen d'un ressort (5).

4. Dispositif selon l'une quelconque des revendications 1 à 3, caractérisé par le fait que le cylindre (9), en tant que partie d'une masse de détection (3, 9; 39), est guidé de façon mobile pour débloquer le dispositif de blocage (2, 19; 28, 30; 38), de sorte que le générateur de gaz (1) avec l'amorce (16) peuvent être déplacés en direction d'un percuteur (4) prévu sur le piston (3).

5. Dispositif selon l'une quelconque des revendications 1 à 4, caractérisé par le fait qu'un ou plusieurs orifices de buses (14) du piston (3) débouchent dans une chambre de pression (15) du cylindre (9).

6. Dispositif selon l'une quelconque des revendications 1 à 5, caractérisé par le fait que le cylindre (9) est guidé de façon mobile dans un support (10; 43, 49) solidaire du véhicule.

7. Dispositif selon l'une quelconque des revendications 1 à 6, caractérisé par le fait que le piston (3), en tant qu'autre partie intégrante de la masse de détection, est mobile avec le cylindre (9).

8. Dispositif selon l'une quelconque des revendications 1 à 7, caractérisé par le fait que le générateur de gaz (1) comporte une enveloppe cylindrique (18) qui peut être plaquée vers l'extérieur contre la paroi interne du piston (3) par la pression du gaz de propulsion.

9. Dispositif selon l'une quelconque des revendications 1 à 8, caractérisé par le fait que le dispositif de blocage (2, 19; 28, 30; 38) est constitué par au moins un élément de blocage (2; 28; 38) qui est logé de façon mobile dans un évidement (19; 55) du piston (3), et qui en position de repos pénètre dans l'espace intérieur du piston.

10. Dispositif selon l'une quelconque des revendications 1 à 9, caractérisé par le fait que lors du déplacement de la masse de détection (3, 9) provoqué par une charge de collision, l'élément de blocage (2; 28) peut être déplacé hors de l'espace intérieur du piston (3) par l'action du ressort (5).

11. Dispositif selon l'une quelconque des revendications 1 à 9, caractérisé par le fait que lors du déplacement de la masse de détection (3, 9; 39) provoqué par une charge de collision, l'élément de blocage peut être déplacé dans l'espace intérieur du piston (3) par l'action du ressort (5).

12. Dispositif selon l'une quelconque des revendications 1 à 11, caractérisé par le fait que l'emplacement, au niveau duquel le dispositif de blocage (2, 19; 28, 30) est disposé dans la paroi du piston (3), est recouvert de façon étanche aux gaz par une partie de l'enveloppe cylindrique (18) du générateur de gaz (1) qui est plaquée contre la paroi interne du piston (3) par la pression du gaz de propulsion.

13. Dispositif selon l'une quelconque des revendications 1 à 12, caractérisé par le fait qu'en cas de collision, la masse de détection (3, 9; 39) est mobile dans le sens axial du cylindre (9) sur le support (10; 43, 49) solidaire du véhicule.

14. Dispositif selon l'une quelconque des revendications 1 à 12, caractérisé par le fait qu'en cas de collision, la masse de détection est mobile transversalement au sens axial du support solidaire du véhicule.

15. Dispositif selon l'une quelconque des revendications 1 à 14, caractérisé par le fait que le cylindre (9) est maintenu en position de repos avec le support solidaire du véhicule, en partie par friction.

16. Dispositif selon l'une quelconque des revendications 1 à 15, caractérisé par le fait que le cylindre (9) est maintenu en position de repos par la force d'un ressort ou par des éléments de rappel élastiques.

17. Dispositif selon l'une quelconque des revendications 1 à 16, caractérisé par le fait que l'élément de blocage est conçu sous la forme de billes (12; 38).

18. Dispositif selon l'une quelconque des revendications 1 à 16, caractérisé par le fait que l'élément de blocage est conçu sous la forme d'un cône (28).

19. Dispositif selon les revendications 11 et 17, caractérisé par le fait qu'en position de repos, l'élément de blocage conçu sous la forme d'une bille (38) est supporté à l'intérieur du piston de telle sorte que le centre de la bille se situe radialement à l'intérieur de la paroi interne du piston, et que la force du ressort (5) agisse sur la partie de la bille (38) située à l'intérieur de la paroi interne du piston.

20. Dispositif selon la revendication 19, caractérisé par le fait qu'en position de repos, la bille (38) est en outre située dans un évidement (54) d'une douille (45) dans laquelle est logé le générateur de gaz (1), qui est guidée à l'intérieur du piston (3) de façon mobile par rapport à ce dernier, et qui transmet la force du ressort (5) à la bille (38).

21. Dispositif selon l'une des revendications 19 ou 20, caractérisé par le fait que la bille (38) est supportée par une tête de détection (53), qui en position de repos est solidaire du véhicule, et qui comporte un renfoncement radial (41) dans lequel la bille (38) peut être déplacée radialement vers l'intérieur sous l'action de la force du ressort (5) pour débloquer le dispositif de blocage, et qu'un ressort (40) de détection est supporté par la tête de détection (53) contre lequel peut être déplacée la masse de détection (3, 9; 39).
